# DEMANDE DE BREVET EUROPEEN

(11) **EP 2 063 300 A1**
(43) Date de publication de la demande: **27.05.2009**
(21) Numéro de dépôt: 08169711.2
(22) Date de dépôt: 21.11.2008
(51) Int. Cl.: G02B 6/36, G02B 27/64, H04B 10/22

(54) **Canal de trés haute qualité pour les joints tournants optiques multivoies**

(30) Priorité: 23.11.2007 FR 0708212
(71) Demandeur: Thales, 92200 Neuilly-sur-Seine (FR)
(72) Inventeur: Merlet, Thomas, 91410, Dourdan (FR); Queguiner, Morgan, 91410, Saint Cyr Sous Dourdan (FR)
(74) Mandataire: Lucas, Laurent Jacques

(57) **Abrégé**

La présente invention concerne le domaine des joints tournant, ou des dispositifs apparentés. Elle porte, en outre, plus spécifiquement sur les joints tournant optiques.

L'invention consiste un Joint tournant optique multivoies, comportant un plan fixe, un plan mobile autour d'un axe de rotation de référence et un prisme de Dove, placé entre le plan fixe et le plan mobile et mobile en rotation sur lui-même autour d'un axe de rotation coaxial de l'axe de rotation de référence. L'ensemble est configuré pour que lorsque le plan mobile tourne à une vitesse ω, le prisme tourne à une vitesse ω/2. Les voies optiques sont agencées de façon à traverser le prisme.

Le prisme de Dove est ici modifié pour comporter un canal optique central par lequel une onde optique traverse le cristal sans subir de déviation, l'axe du canal étant coaxial de l'axe de rotation de référence. Une voie optique est en outre agencée dans le joint de façon à traverser le joint en suivant un axe sensiblement confondu avec l'axe de rotation de référence

Elle concerne notamment les domaines des systèmes radars, des systèmes de forage, des engins robotisés, pour transmettre des signaux avec un niveau de qualité analogique.

## Description

La présente invention concerne le domaine des joints tournant, ou des dispositifs apparentés, qui permettent dans un système comportant plusieurs sous-ensembles d'assurer la transmission de signaux par liaison physique entre un sous-ensemble fixe et un matériel en rotation autour d'un axe. Elle concerne notamment les domaines des systèmes radars, des systèmes de forage, des engins robotisés, qui mettent en jeu la transmission de signaux avec un niveau de qualité analogique. Elle porte, en outre, plus spécifiquement sur les joints tournant optiques.

Le concept de type joint tournant regroupe une vaste gamme dispositifs dont les caractéristiques physiques et structurelles sont principalement fonction de la nature du signal transmis. Ainsi, dans le domaine des signaux électriques et électromagnétiques, la gamme des joints tournant s'étend des dispositifs collecteurs, chargé de transférer à un dispositif en rotation des signaux électriques et d'alimentation, aux joints tournants optiques en passant par les joints tournant UHF et hyperfréquence. S'agissant des joints tournants radioélectriques (hyperfréquence en particulier) et optiques le problème à résoudre consiste à transmettre une ou plusieurs ondes électromagnétiques au travers d'un dispositif de transition - le joint tournant - en occasionnant le moins de perturbation possible aux signaux traversant le joint tournant. Les perturbations les plus importantes étant constituées d'une part par les ondulations de niveau durant la rotation et d'autre part par les phénomènes de réflexion (autrement dit de désadaptation) qui affectent les signaux à l'occasion de leur passage dans le joint tournant. Parmi les joints tournants électromagnétiques, les joints tournants optiques présentent un grand avantage car ils permettent de faire passer un grand nombre de signaux avec sur une même liaison physique (bande passante élevée). Ils sont en outre techniquement plus simples à réaliser et de taille plus réduite que les autres joints tournants.

Pour passer plusieurs canaux optiques à travers un même joint tournant, il existe deux types de solutions connues.

Le premier type connu de solutions consiste à mettre en oeuvre un joint tournant monovoie et à recourir au multiplexage en longueur d'onde, principe qui permet de transmettre sur une même fibre optique unique un certain nombre d'ondes (porteuses) optiques dont les différentes longueurs d'ondes suivent par exemple une distribution en peigne, chaque onde porteuse véhiculant un signal dédié.

Ce premier type de joint tournant optique, multicanaux mais monovoie, a pour principal inconvénient d'ajouter des pertes optiques à la liaison ainsi réalisée, pertes sensibles sur l'ensemble des canaux de transmission. Ces pertes, naturellement liées à l'insertion d'un multiplexeur et d'un démultiplexeur optiques respectivement avant et après le joint tournant, sont fonction du nombre de voies multiplexées, les contraintes technologiques de réalisation des multiplexeurs optiques induisant des pertes proportionnelles aux nombres de canaux. C'est pourquoi, pour les applications nécessitant l'utilisation d'un nombre important de canaux de communication (typiquement supérieur à 16) et/ou pour des applications impliquant la transmission de signaux à très grande dynamique, un tel type de solution n'est pas envisageable.

Le second type connu de solutions consiste à mettre en oeuvre des joints tournants multivoies, et en particulier des joints tournants dont la réalisation est classiquement basée sur l'utilisation du prisme de Dove. De manière connue, ce type de prisme, prisme dit "dérotateur d'image", permet lorsqu'il est mis en rotation avec une demi-vitesse de rotation, de conjuguer 2 plans fixes dans leurs repères stator et rotor respectifs. Ainsi, plusieurs canaux optiques para-axiaux sont disponibles. On entend ici par demi-vitesse de rotation une vitesse de rotation égale à la moitié de la vitesse de rotation du joint dans son ensemble.

Ce second type de joint tournant a, quant à lui, pour inconvénient de requérir une grande précision de fabrication de sorte que, malgré tout le soin que l'on peut apporter à leur réalisation, les voies de transmission optique ainsi formées sont néanmoins sujets à des fluctuations d'intensité et de longueurs inhérentes aux réflexions multiples à l'intérieur du prisme au cours de la rotation ainsi qu'aux défauts d'axialité qui occasionnent en particulier des pertes d'insertion et des distorsions de phase sur les signaux transportés. Ces perturbations peuvent s'avérer critiques lorsque l'on a besoin de transmettre des signaux avec une qualité de transmission analogiques, signaux représentant des grandeurs continues de grande dynamique, tels que des oscillateurs locaux par exemple.

Un but de l'invention est de proposer une solution technique permettant de transmettre une pluralité de signaux portés par des voies optiques différentes entre un équipement fixe et un équipement mobile en rotation autour d'un axe. Un autre but de l'invention est de proposer une solution permettant de transmettre des signaux nécessitant une grande qualité et une grande fidélité de transmission.

A cet effet l'invention a pour objet un Joint tournant optique multivoies, comportant un plan fixe, un plan mobile autour d'un axe de rotation de référence vis à vis duquel sont positionnées, sur le plan fixe, les entrées des voies optiques traversant le joint, et, sur le plan mobile, les sorties des mêmes voies. Ledit joint tournant comporte également un prisme de Dove, positionné entre le plan fixe et le plan mobile, mobile en rotation sur lui-même autour d'un axe de rotation coaxial de l'axe de rotation de référence. L'ensemble est configuré pour que lorsque le plan mobile tourne à une vitesse ω, le prisme tourne à une vitesse ω/2, et agencé de telle sorte que les ondes lumineuses portées par les voies optiques traverse le prisme.

Le joint tournant optique selon l'invention est caractérisé en ce que le prisme de Dove est modifié pour comporter un canal optique central par lequel une onde optique traverse le cristal sans subir de déviation, l'axe du canal étant coaxial de l'axe de rotation de référence. Une voie optique est en outre agencée dans le joint de façon à ce que son entrée au niveau du plan fixe et sa sortie au niveau du plan mobile se produisent en des points sensiblement confondus avec les intersections desdits plans avec l'axe de rotation de référence.

Selon une forme de réalisation particulière de l'invention, le canal optique central est obtenu en réalisant un conduit tubulaire dépourvu de matière traversant le prisme dans sa totalité, coaxial de l'axe de rotation de référence et dans lequel une onde lumineuse incidente se propage en espace libre.

Selon une autre forme de réalisation particulière de l'invention, le canal optique central est obtenu en réalisant une rectification de chacune des faces frontales du prisme, respectivement situées en regard des plans fixe et mobile, autour du point d'intersection de cette face avec l'axe de rotation de référence, de façon à former une zone d'incidence perpendiculaire à cet axe, compatible en surface avec l'étendue géométrique du faisceau optique transmis, de sorte que une onde lumineuse portée par la voie optique centrale pénètre dans le prisme une incidence normale à cette zone l'onde incidente se propageant ainsi dans le prisme sans subir de déviation.

Dans une variante de la forme de réalisation précédente la zone axiale de chacune des zones rectifiées reçoit un traitement anti-reflet, minimisant ainsi les réflexions optiques du canal central.

Selon une autre forme de réalisation particulière de l'invention, pouvant être combinée avec les formes précédentes le joint tournant selon l'invention comporte en outre une lame cristalline demi-onde montée mobile en rotation autour d'un axe coaxial de l'axe de rotation de référence, entre le plan fixe et le plan mobile, et agencé de façon à ce que les ondes lumineuses portées par les voies optiques la traverse, et qu'elle tourne à la même vitesse ω/2 que le prisme de Dove lorsque le joint tournant tourne à la vitesse ω.

Dans une variante de la forme de réalisation précédente la lame cristalline demi-onde est placée entre le plan fixe et le prisme.

Dans une autre variante de la forme de réalisation précédente la lame cristalline demi-onde est placée entre le prisme et le plan mobile.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:
- la figure 1, la structure schématique d'un joint tournant optique simple;
- la figure 2, la structure schématique d'un joint tournant optique multivoies comportant un dispositif rotateur d'image de type prisme de Dove;
- la figure 3, la structure schématique du joint tournant optique multivoies selon l'invention.
- les figures 4 et 5, des représentations schématiques de mode de réalisation du prisme de Dove mis en oeuvre dans le joint tournant optique selon l'invention.
- les figures 6 à 8, des illustrations schématiques relatives à des variantes de réalisation du joint tournant optique selon l'invention.

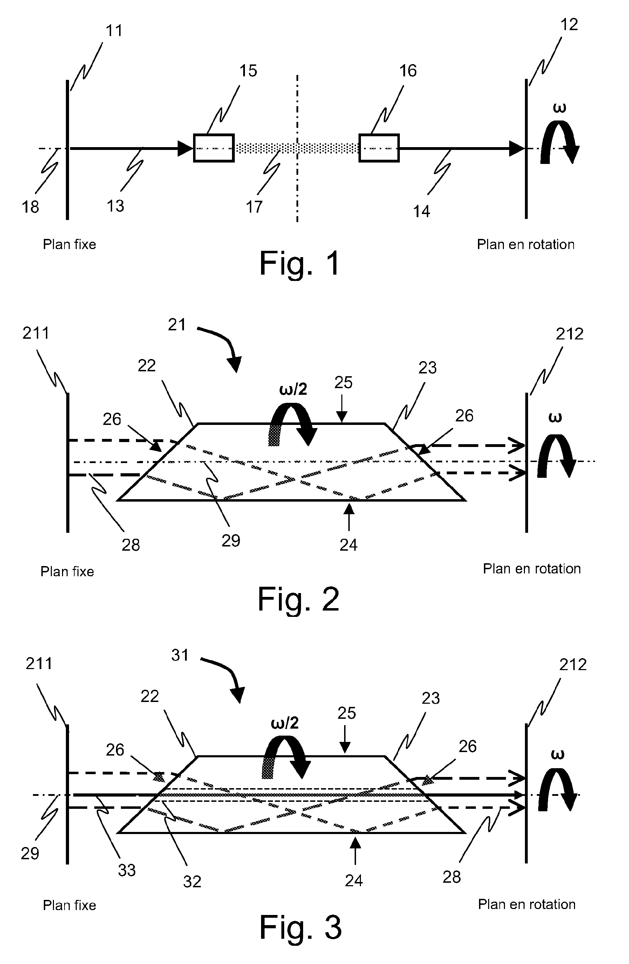

On s'intéresse d'abord aux figures 1 et 2 qui présentent deux types connus de joints tournants optiques.

La figure 1 présente schématiquement la structure d'un joint tournant optique simple, monovoie. Comme tout joint tournant, il comporte une partie fixe ou stator 11 formant un plan fixe de référence sur lequel débouche la voie optique amenant l'onde lumineuse jusqu'à l'entrée du joint tournant. Il comporte également une partie mobile ou rotor 12 en rotation autour d'un axe 18. Un mode de réalisation courant d'un tel joint tournant optique consiste à mettre précisément en regard les extrémités de deux fibres optiques 13 et 14 au moyen de dispositifs de collimation 15 et 16, l'ensemble étant agencé dans un roulement de précision (non représenté sur la figure) de façon à ce que le faisceau collimaté 17 issu de la fibre 13 du stator soit capté par le dispositif de collimation de la fibre 14 du rotor. La transmission de l'onde lumineuse du stator au rotor s'effectue ainsi en espace libre de sorte qu'une altération d'amplitude ou de phase du signal porté par l'onde lumineuse minimale soit produite. II est donc possible de transmettre entre le stator et le rotor des signaux dont la transmission nécessite l'existence d'un canal de transmission de très bonne qualité (on parle à ce propos de qualité "analogique"). C'est le cas par exemple si l'on désire transmettre à travers le joint tournant des signaux constituant des références de temps plus généralement de phase. En revanche comme cela a été dit précédemment, un tel dispositif ne permet la transmission que d'une voie unique de sorte que la transmission de plusieurs signaux ne peut être effectuée qu'en procédant par multiplexage, multiplexage de longueurs d'ondes en l'occurrence. Or le nombre de longueurs d'ondes pouvant être multiplexées étant limité, en particulier par la capacité des fibres optiques, le nombre de signaux pouvant être transmis au travers d'un tel joint tournant est également limité à quelques signaux.

La figure 2 présente schématiquement un type de joint tournant optique multivoie de structure connue, dont la structure est basée sur l'utilisation d'un prisme de Dove. On rappelle ici que le prisme de Dove est un dispositif optique 21 connu, un prisme droit, dont les bases sont des trapèzes dont les côtés 22 et 23 sont portés par deux droites perpendiculaires. Ce prisme comporte ainsi deux faces rectangulaires parallèles 24 et 25 et deux faces 26 et 27, faces frontales, qui présentent entre elles un angle de 90°.

Comme l'illustre la figure 2, ce prisme est principalement caractérisé, de manière connue, par le fait qu'un faisceau 28, entrant de manière incidente par une des faces frontales 26 ou 27 dans le prisme, parallèlement à l'axe 29 passant par les centres de ces deux faces frontales, est dévié à l'intérieur du prisme vers la surface de la face 24 sur laquelle il se réfléchit totalement pour finalement ressortir du prisme par la face frontale opposée suivant une direction parallèle à sa direction d'entrée. De la sorte le faisceau incident subit, entre l'entrée et la sortie du prisme, une translation de valeur constante. Le sens de la translation est par ailleurs donné par la position qu'occupe le point d'incidence du faisceau sur la face frontale 26 ou 27 d'entrée, par rapport au plan de réflexion que matérialise la face 24. De manière connue également, le prisme de Dove est encore caractérisé par le fait que compte tenu de ses caractéristiques géométriques, s'il est mis en rotation, à partir d'une position de repos telle que celle illustrée par la figure 2, autour de l'axe 29 passant par les centres des deux faces frontales 25 et 26, le faisceau 27 subit une translation variant de manière périodique, la translation se retrouvant identique à la translation initialement subie par le faisceau chaque fois que le prisme a effectué une rotation d'un angle égal à k·π par rapport à sa position initiale.

Par suite il est connu de mettre à profit ces caractéristiques techniques pour réaliser un joint tournant optique multivoies. Le dispositif correspondant est réalisé en agençant un stator présentant un plan fixe sur lequel débouchent, en des points fixes, les voies physiques (des fibres optiques par exemple) véhiculant les faisceaux lumineux à transmettre avec un rotor constitué par un plan 212 mobile en rotation, sur lequel débouchent les voies physiques véhiculant les faisceaux lumineux en sortie du joint tournant. Les deux plans sont par ailleurs parallèles et l'agencement des positions relatives des points sur lesquels débouchent les voies lumineuses d'entrée au niveau du plan fixe 211 du stator est identique à celui des points sur lesquels débouchent les voies lumineuses de sortie au niveau du plan mobile 212 du rotor. Ils sont en outre agencés l'un par rapport à l'autre de façon à ménager un espace libre entre eux et de façon à ce que le plan mobile en rotation 212 puisse prendre une orientation telle que chaque point de sortie de faisceau du plan tournant 212 se trouve placé en vis à vis d'un point d'entrée de faisceau du plan Fixe 211. Dans l'espace ménagé entre les deux plans est placé un prisme de Dove mobile en rotation autour de l'axe 29 joignant les milieux des deux faces frontales 26 et 27. Celui-ci est agencé de telle sorte que les faces parallèles 24 et 25 soient perpendiculaires aux plans 211 et 212 et que l'axe de rotation 28 soit confondu avec l'axe de rotation du plan tournant 212. II est en outre solidaire en rotation avec ce plan, au moyen d'un élément de démultiplication qui entraîne une rotation du prisme à une vitesse égale à ω/2, lorsque le stator est en rotation à une vitesse ω donnée. On obtient ainsi un dispositif dans lequel il existe une liaison univoque permanente entre un point d'entré du joint tournant et un point de sortie, et ce, quelle que soit l'orientation relative à l'instant considéré du plan fixe, c'est à dire du stator et du plan mobile, c'est à dire du rotor.

Comme il a été dit précédemment un tel dispositif permet avantageusement une transmission multivoies, le nombre de voies optiques que peut véhiculer un tel dispositif étant naturellement fonction de la taille du prisme utilisé: les points d'entrée et de sortie devant être agencés dans les zones des plans fixe 211 et tournant 212 situées en regard des faces frontales 26 et 27 du prisme de façon à ce que chacun des faisceaux transmis soit en mesure de pénétrer dans celui-ci. Cependant du fait des tolérances de fabrication nécessaires, en particulier des tolérances d'alignement des différents axes, il est difficile et surtout très onéreux de réaliser joint optique permettant la transmission des différentes voies optiques avec une qualité suffisante pour assurer une transmission de signaux sans altération d'amplitude ou de phase. Cette limitation de la qualité de réalisation ne permet pas en particulier, sauf à soigner tout particulièrement la réalisation du joint tournant, de transmettre des signaux de référence tels que des oscillateurs locaux par exemple.

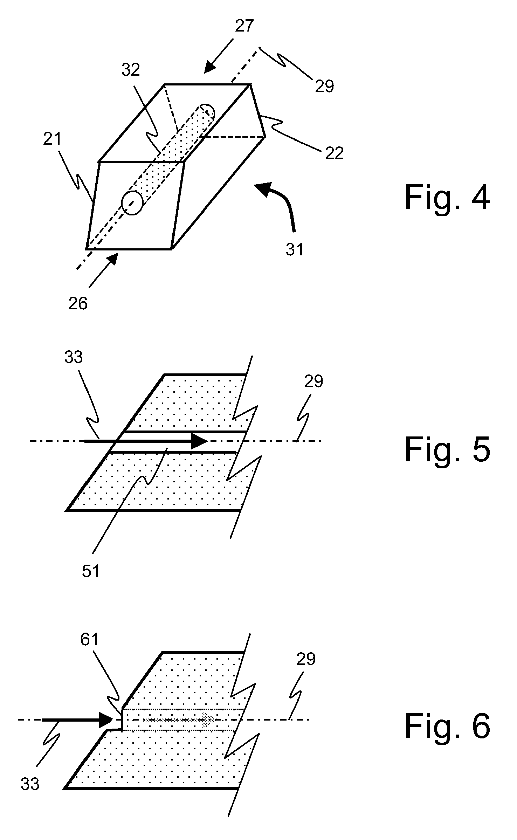

On s'intéresse ensuite aux figures 3 et 4 qui illustrent schématiquement le principe de fonctionnement du dispositif selon l'invention.

Le Joint tournant optique multivoies selon l'invention reprend la structure d'un joint optique multivoies à prisme de Dove classique, tel que décrit précédemment. II comporte donc classiquement, comme l'illustre de manière schématique la figure 3, un nombre donné de voies optiques dont les points d'accès en entrée et en sortie d'entrée sont agencés, comme décrit précédemment, autour de l'axe de rotation du prisme de Dove. Cependant, le prisme de Dove utilisé ici, est un prisme modifié 31 de façon à ménager autour de l'axe de rotation 29 un canal optique particulier 32 dans lequel un faisceau lumineux incident 33 est transmis au travers du prisme sans subir de déviation. Ce canal optique 32 étant en outre coaxial de l'axe de rotation du prisme, sa position, relativement au plan fixe 211 et au plan mobile 212, reste invariante lorsque le rotor est en rotation. De la sorte, le faisceau incident sur ce canal particulier ne subit avantageusement aucune variation parasite de son amplitude ou de sa phase variations notamment liées aux réflexions du faisceau dans le prisme et aux variations de chemin optique liées à la rotation du prisme sur lui-même. Le prisme ainsi réalisé présente une structure générale telle que celle illustrée schématiquement par la figure 4.

On dispose ainsi avantageusement, d'un joint tournant optique multivoies présentant une pluralité de voies optiques de qualité standard, disposées autour de l'axe de rotation 29 de façon à ce que les ondes lumineuses empruntant ces voies optiques traversent le prisme, et une voie optique de qualité analogique dans laquelle une ou plusieurs ondes lumineuses peuvent être transmises sans altération d'amplitude ou de phase. Ce dispositif est obtenu grâce à l'utilisation d'un prisme de Dove, modifié de façon à former un canal central dans lequel une onde incidente ne subit aucune déviation, le prisme 31 étant et agencé entre les plans 211 et 212 de façon à ce que les éléments du joint 31 et 212, mobiles en rotation, aient un seul et même axe de rotation 29 coaxial de l'axe du canal.

D'un point de vue pratique le prisme de Dove ainsi modifié peut être réalisé à partir d'un prisme de Dove classique de différentes façons. Deux modes de réalisation préférés sont illustrés par les figures 5 et 6.

Dans le mode de réalisation de la figure 5, le prisme de Dove est modifié pour réaliser une excavation formant un canal tubulaire 51 de section circulaire concentrique de l'axe de rotation 29 du prisme, dans le matériau constituant le prisme. Le canal ainsi réalisé permet la propagation rectiligne du faisceau incident 33 dans un milieu constitué d'air, qui présente l'avantage de ne pas occasionner d'atténuation du faisceau ainsi transmis. En revanche la réalisation d'un tel canal rend l'usinage du prisme plus complexe, la réalisation du canal devant se faire sans altérer les propriétés optiques du prisme.

Le mode de réalisation de la figure 6, correspond à une modification plus simple du prisme de Dove classique. Cette modification consiste à rectifier localement les faces frontales 26 et 27, de façon à former dans une surface de section circulaire 61 par exemple, perpendiculaire à l'axe de rotation 29 du prisme et centrée sur son intersection avec cet axe; le diamètre de cette surface correspondant au diamètre du canal à réaliser. On forme ainsi à la surface du prisme une zone 61 dans laquelle un faisceau incident 32, parallèle à l'axe 29, traverse la face frontale sans subir de déviation, l'angle d'incidence étant nul. Tout se passe alors comme si le faisceau 32 traversait un canal 62 virtuel.

Ce mode de réalisation, avantageusement plus simple que le précédent, présente cependant l'inconvénient d'imposer au faisceau incident la traversée du matériau constituant le prisme, cette traversée s'accompagnant d'une réflexion partielle du signal sur le dioptre droit. Cette réflexion peut avantageusement être amoindrie en déposant un traitement anti-reflet sur la surface 61.

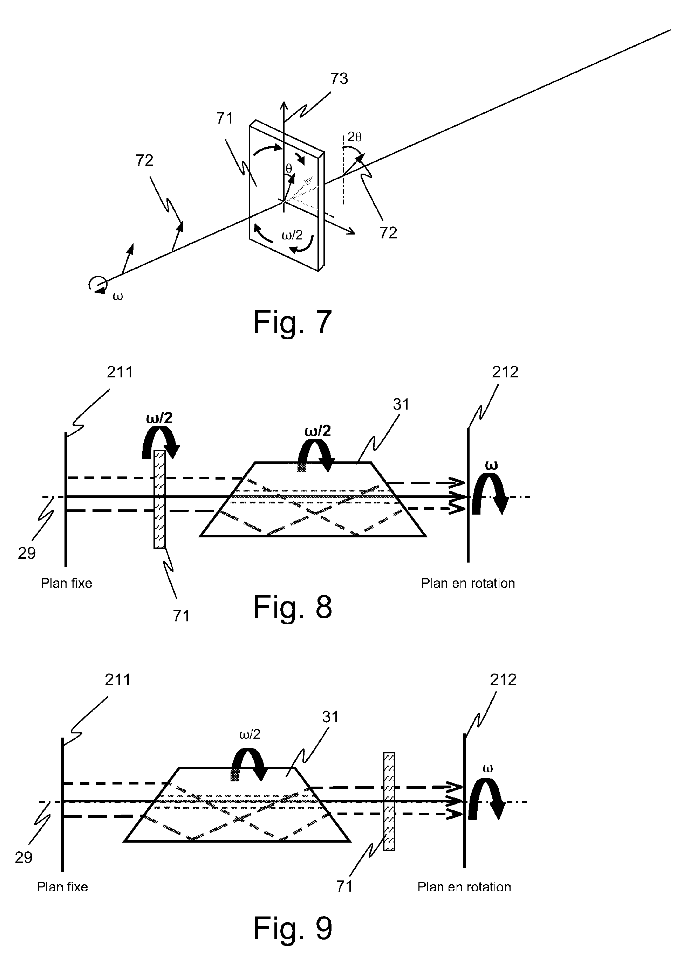

On s'intéresse ensuite aux figure 7 à 9, qui présentent de manière schématique une variante de réalisation du dispositif selon l'invention. Dans cette variante de réalisation le joint tournant selon l'invention comporte outre un prisme de Dove modifié, avec un canal central, une lame cristalline demi-onde solidaire du prisme en rotation. L'ensemble est agencé de façon à ce que, lorsque le rotor du joint tourne à une vitesse ω, le prisme et la lame demi-onde tourne à une vitesse ω/2.

De manière connue, comme l'illustre la figure 7, une lame cristalline demi-onde 71 a pour propriété de modifier la direction de polarisation des ondes polarisées. Ainsi une onde lumineuse 72 à polarisation rectiligne, pénétrant dans une lame demi-onde 71 sous incidence normale et présentant une direction de polarisation faisant un angle θ avec l'un des axes principaux de propagation de la lame, l'axe ordinaire 73 par exemple, subira, durant sa traversée, une déviation de sa direction de polarisation égale à 2θ.

Par suite si, comme dans le cas de cette variante du dispositif selon l'invention, la lame demi-onde est en mouvement en rotation à une vitesse ω/2, la déviation de la direction de l'onde incidente sera égale à 2θ+ωt. De la sorte, si cette onde est collectée par un capteur dont l'axe de polarisation tourne, quant à lui, à la vitesse ω, l'orientation de l'axe de polarisation de l'onde incidente par rapport à l'axe de polarisation du capteur reste inchangé. C'est avantageusement le cas du joint tournant selon l'invention pour lequel le capteur en question, une fibre optique par exemple, est positionné au niveau du rotor qui tourne à la vitesse ω. On obtient ainsi un joint tournant optique multivoies qui permet la transmission fidèle d'ondes polarisées, en polarisation rectiligne notamment.

Les figure 8 et 9 présente deux exemples concrets d'agencements possibles des différents éléments pour cette variante du joint tournant selon l'invention. La figure 8 présente un agencement selon lequel la lame cristalline demi-onde est positionnée en tête, entre le plan fixe 211 (stator) et le prisme de Dove 31 modifié. La figure 9, quant à elle, présente un agencement alternatif selon lequel la lame cristalline demi-onde est positionnée entre le prisme 31 et le plan tournant 212 (rotor).

## Revendications

1. Joint tournant optique multivoies, comportant un plan fixe (11, 211), un plan mobile (12, 212) autour d'un axe de rotation (18, 29) de référence vis à vis duquel sont positionnées, sur le plan fixe, les entrées des voies optiques (28) traversant le joint, et, sur le plan mobile, les sorties des mêmes voies, ledit joint tournant comportant également un prisme de Dove (21, 31), positionné entre le plan fixe (211) et le plan mobile (212), mobile en rotation sur lui-même autour d'un axe de rotation coaxial de l'axe de rotation de référence (29), l'ensemble étant configuré pour que lorsque le plan mobile tourne à une vitesse ω, le prisme tourne à une vitesse ω/2, et agencé de telle sorte que les ondes lumineuses portées par les voies optiques traverse le prisme;
**caractérisé en ce que** le prisme de Dove est modifié pour comporter un canal optique central (32) par lequel une onde optique traverse le cristal sans subir de déviation, l'axe du canal étant coaxial de l'axe de rotation de référence (29), une voie optique (33) étant agencée dans le joint de façon à ce que son entrée au niveau du plan fixe et sa sortie au niveau du plan mobile se produisent en des points sensiblement confondus avec les intersections desdits plans avec l'axe de rotation de référence.

2. Joint tournant selon la revendication 1, **caractérisé en ce que** le canal optique central est obtenu en réalisant un conduit tubulaire dépourvu de matière (51) traversant le prisme dans sa totalité, coaxial de l'axe de rotation de référence et dans lequel une onde lumineuse incidente se propage en espace libre.

3. Joint tournant selon la revendication 1, **caractérisé en ce que** le canal optique central est obtenu en réalisant une rectification de chacune des faces frontales (26, 27) du prisme, respectivement situées en regard des plans fixe (211) et mobile (212), autour du point d'intersection de cette face avec l'axe de rotation de référence, de façon à former une zone d'incidence (61) perpendiculaire à cet axe, compatible en surface avec l'étendue géométrique du faisceau optique transmis, de sorte que une onde lumineuse portée par la voie optique centrale (33) pénètre dans le prisme (31) avec une incidence normale à cette zone, l'onde incidente se propageant ainsi dans le prisme sans subir de déviation.

4. Joint tournant selon la revendication 3 **caractérisé en ce que** la zone axiale de chacune des zones rectifiées (61) reçoit un traitement anti-reflet, minimisant ainsi les réflexions optiques du canal central (32).

5. Joint tournant selon l'une quelconque des revendications 1 à 4, **caractérisée en ce qu'**il comporte en outre une lame cristalline demi-onde (71) montée mobile en rotation autour d'un axe coaxial de l'axe de rotation de référence (29), entre le plan fixe (211) et le plan mobile (212), et agencé de façon à ce que les ondes lumineuses portées par les voies optiques (28, 33) la traversent; la lame cristalline demi-onde (71) tournant à la même vitesse ω/2 que le prisme (31) de Dove lorsque le joint tournant tourne à la vitesse ω.

6. Joint tournant selon la revendication 5, **caractérisé en ce que** la lame cristalline demi-onde (71) est placée entre le plan fixe (211) et le prisme (31).

7. Joint tournant selon la revendication 5, **caractérisé en ce que** la lame cristalline demi-onde (71) est placée entre le prisme (31) et le plan mobile (212).
